Europäisches Patentamt

European Patent Office

Office européen des brevets

(19)

(11) Publication number: 0 312 272
A2

## (12) EUROPEAN PATENT APPLICATION

(21) Application number: 88309433.6

(22) Date of filing: 10.10.88

(51) Int. Cl.4: G01G 19/32 , G01G 19/42

(30) Priority: 09.10.87 JP 255203/87

(43) Date of publication of application:
19.04.89 Bulletin 89/16

(84) Designated Contracting States:
DE FR GB IT

(71) Applicant: ISHIDA SCALES MFG. CO. LTD.
44, Shogoin Sannou-cho Sakyo-ku
Kyoto-shi Kyoto(JP)

(72) Inventor: Sakaeda, Keiko
1-20, Kinugasa Takahashi-cho Kita-ku
Kyoto-shi Kyoto(JP)

(74) Representative: Fane, Christopher Robin King
et al
HASELTINE LAKE & CO. Hazlitt House 28
Southampton Buildings Chancery Lane
London, WC2A 1AT(GB)

(54) Combinatorial counting method and weighing apparatus therefor.

(57) A combinatorial counting method for counting a large number of articles, and a weighing apparatus for carrying out such a combinatorial counting method, are proposed. When the articles are weighed and counted in a number of divided cycles or operations, no combinatorial calculations are effected, and articles are simply discharged with their numbers being stored from the time of starting the weighing process until a prescribed condition is met. The combinatorial calculations are effected only when the final weighing and counting operation is carried out. Such a counting process can enable a large target number of articles to be counted out with reduced counting errors, and at a higher speed, than can be achieved by prior art processes.

Fig. 2

## COMBINATORIAL COUNTING METHOD AND WEIGHING APPARATUS THEREFOR

The present invention relates to a combinatorial counting method and weighing apparatus therefor.

Various combinatorial weighing methods are known which employ a plurality of weighing machines each comprising a weighing hopper and a weight detector associated therewith. One problem with such combinatorial weighing methods is that an actual combination weight value obtained with respect to a preset target weight value suffers a weight error for various reasons. When a target weight value is preset in excess of a maximum amount of articles that can be weighed by the weighing apparatus, a weighing process is repeated a plurality of times and a plurality of weight values of weighed articles are totaled. This procedure also tends to cause a weight error.

Where articles to be weighed are small products of unit weights which are relatively close to each other, e.g., products molded of resin or candies, it is possible to know the number of supplied articles by giving the weighing apparatus for effecting a combinatorial weighing process information indicating the average unit weight of the articles because the number of articles can be found simply by dividing the total weight by the unit weight. More specifically, the number of articles in each weighing hopper is determined by dividing the total weight of the weighed articles by the average unit weight of the articles. Then, the numbers of articles in the weighing hoppers are combined in different combinations, and weighing machines which give a combination of numbers which is optimum with respect to a target number of articles are selected. The selected weighing machines are then operated to discharge the articles therefrom.

Typical combinatorial weighing apparatus comprises 8 to 16 weighing machines for effecting combinatorial calculations on weight data. When a combinatorial counting process for counting articles is effected rather than a combinatorial weighing process on a weighing apparatus, even if an allowable error is + 1 for a target number of 30, an allowable error for a target number of 100 is not + 3 but + 1 in many cases. Here, the accuracy of the weighing apparatus is not expressed as a ratio but as an absolute number. It has empirically been known that in order to achieve the accuracy of + 1 steadily for a combinatorial counting process which is effected on a range of 8 to 16 data, a target number that is preset in the weighing apparatus is up to 30 at most. Since the weight values in the respective weighing hoppers are converted into integral values by the weight division, the probability of getting a combination composed of the target number of articles is increased, but it is only because differences between individual data prior to being combined are small.

If a target number is preset which cannot be achieved by one weighing operation in the above combinatorial counting method, the target number may be divided to establish smaller target numbers for a plurality of weighing cycles, and each time a weighing cycle is carried out, errors up to the previous weighing cycle may be stored for sequentially correcting the target numbers in subsequent weighing cycles. Such a multiplexed combinatorial counting procedure is apt to cause an error as it is more difficult to process fractions than in a combinatorial weighing procedure.

Therefore, even if articles to be counted have relatively close unit weights and any error produced when converting a total weight into a number is small, presetting a target number that is large relatively to the number of weighing machines used would directly result in a reduction in the accuracy. In case a target number is established which is in excess of a maximum number of articles that can be weighed by the weighing apparatus, a highly accurate counting process may be accomplished by effecting a plurality of weighing cycles and lowering target numbers respectively for the weighing cycles. However, accumulated errors cannot be neglected, and the efficiency of the entire counting process is reduced.

In view of the aforesaid problems of the conventional combinatorial counting methods and weighing apparatus, it is desirable to provide a combinatorial counting method capable of counting articles accurately at a high speed when a large target number is preset, and a weighing apparatus for carrying out such a combinatorial counting method.

According to an embodiment of the present invention a weighing apparatus for carrying out a combinatorial counting method comprises a plurality of weighing machines, processing means for dividing the weights of batches of articles supplied to the respective weighing machines by the average unit weight of the articles to determine the numbers of the articles in the batches, discharging means for discharging the batches of articles, with the weights converted to the numbers, from the weighing machines in each counting process, adding means for adding and storing the numbers of the discharged articles in the batches, and combinatorial counting means for effecting a combinatorial counting process after a value obtained by subtracting the total of the numbers of the discharged articles is below a predetermined value.

With the above arrangement, in each counting process, the articles with their weights converted to numbers are simply discharged, and the discharged numbers are added and stored. In the final counting process, a combinatorial counting process is effected to obtain a preset target number of articles. The counting process can thus be performed at a high speed with high accuracy.

Reference will now be made, by way of example, to the accompanying drawings, in which:

Fig. 1 is a block diagram of a combinatorial weighing apparatus for carrying out a combinatorial counting method embodying the present invention;

Figs. 2 and 3 are flowcharts of an operation sequence of the combinatorial counting method; and

Fig. 4 is a schematic view of a mechanism of the combinatorial weighing apparatus to which the combinatorial counting method of the invention is applicable.

Fig. 4 schematically shows the mechanism of a combinatorial weighing apparatus to which a combinatorial counting method can be applied. The combinatorial weighing apparatus includes a main feeder 1 for radially dispersing and supplying articles to be weighed into a plurality of weighing sections disposed radially and angularly spaced at equal angular intervals. The main feeder 1 is of the vibratory conveyance type for imparting vibratory motion to articles for a predetermined period of time to disperse and supply them into the weighing sections.

N weighing sections 2 are disposed around the main feeder 1 along radially extending lines for receiving the articles supplied from the main feeder 1. Each of the weighing sections 2 includes a dispersing feeder 2a, a pool hopper 2b, a pool hopper gate 2c, a weighing hopper 2d, a weight detector 2e, and a weighing hopper gate 2f.

The dispersing feeder 2a may comprise solely a substantially circular bowl member which has a plurality of gates on its outer circumference, and which is vibrated so that articles will be transferred therealong away from the center of the bowl, or means having a plurality of troughs, provided with feeders, arranged radially about the center of a small conical dispersing table. In either case, each dispersing feeder 2a is so arranged that articles having a total weight substantially equal to a preset weight can be introduced into the corresponding underlying pool hopper 2b. With the dispersing feeder comprising the substantially circular bowl, the quantity of articles supplied to the corresponding pool hopper 2b is regulated by controlling the gate opening time or opening area. With the dispersing feeder having the troughs and feeders, the supply of articles to the pool hopper 2b is regulated by controlling feeder vibration time and vibration amplitude.

The pool hopper gate 2c is provided on each pool hopper 2b in such a manner that the articles received in the pool hopper 2b are released into the weighing hopper 2d when the pool hopper gate 2c is opened. Each weighing hopper 2d is provided with a weight detector 2e of its own. The weight detector 2e is operable to measure the weight of the articles introduced into the corresponding weighing hopper 2d, and to apply an electrical signal indicative of the measured weight to a combination control unit (not shown). In a final weighing operation, the combination control unit selects an optimum combination of weighing machines giving a total number of articles equal or closest to a target number. Each weighing hopper 2d is provided with its own weighing hopper gate 2f. A drive control unit (not shown) produces a signal to open only the weighing hopper gates 2f of those weighing hoppers 2d of the selected combination of weighing machines for discharging the articles from these weighing hoppers 2d.

The articles discharged from the selected weighing hoppers 2d are collected by a collecting chute 3 which guides the articles toward a centrally located lower end thereof. The collecting chute 3 is in the shape of a coni cal or polygonal funnel for guiding the articles that have fallen onto the inner peripheral surface thereof by gravity or by being forcibly shifted along the inclined wall of the funnel by a mechanical scraper oʳ the like (not shown). The articles collected by the collecting chute 3 are then discharged into a packaging machine (not shown).

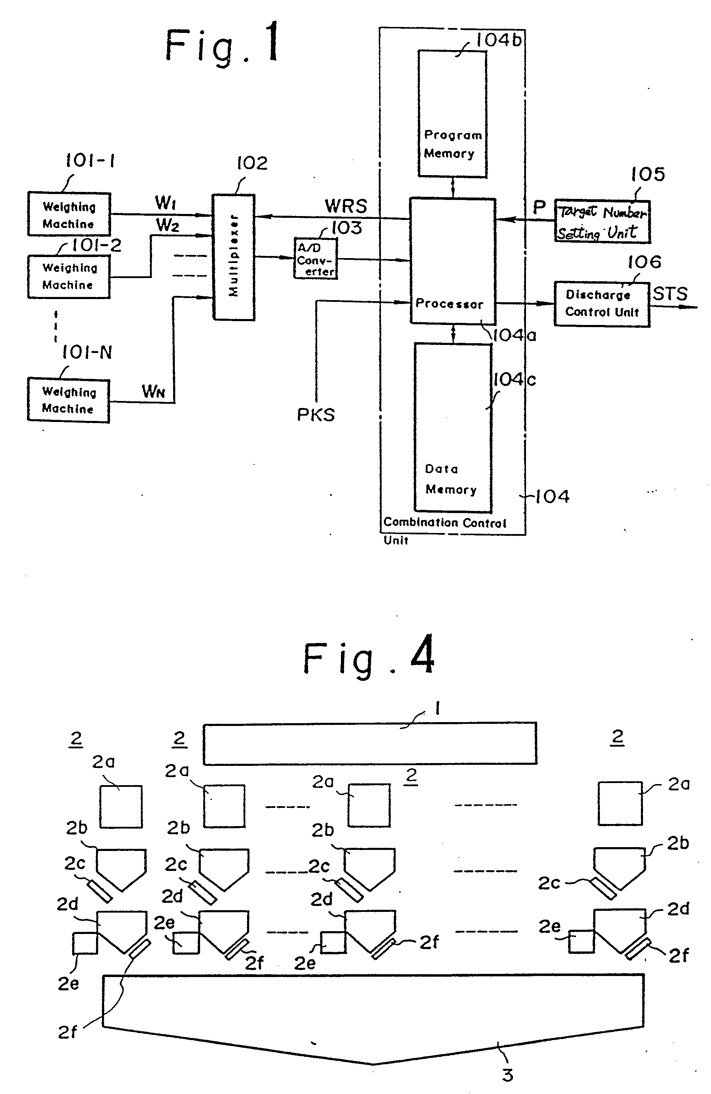

Fig. 1 shows in block form a combinatorial weighing apparatus. Denoted at 101-1, 101-2, ... 101-N are N weighing machines each comprising the weighing hopper 2d and the weight detector 2e for weighing articles supplied thereto. Analog output voltages, which are indicative of the measured weights, are produced by the weighing machines 101-1, 101-2, ... 102-N and applied to a multiplexer 102, which delivers the analog voltages as an output in sequential fashion in response to a weight read signal WRS, described below. An analog-to-digital (A/D) converter 103 converts the analog weight voltages, which are received from the multiplexer 102, into digital weight signals. The digital output of the A/D converter 103 is applied to a combination control unit 104. The latter includes a processor 104a which receives the output of the A/D converter 103, a program memory 104b for storing a combinatorial processing program, and a data memory 104c. The processor 104a executes combinatorial processing, described below, on the basis of the instructions constituting the processing program. A target number setting unit 105 sets a target number P, which is applied to the processor 104a. Denoted at 106 is a discharge control unit for producing a package starting command signal STS.

The combination control unit 104 is supplied with a package enable signal PKS and also stores the average unit weight of articles to be weighed. The combination control unit 104 is also operable to divide weight signals W1, W2, ... WN, supplied from the weighing machines 101-1, 101-2, ... 101-N, by the stored average unit weight, and to effect a combinatorial counting process for obtaining a target number of articles.

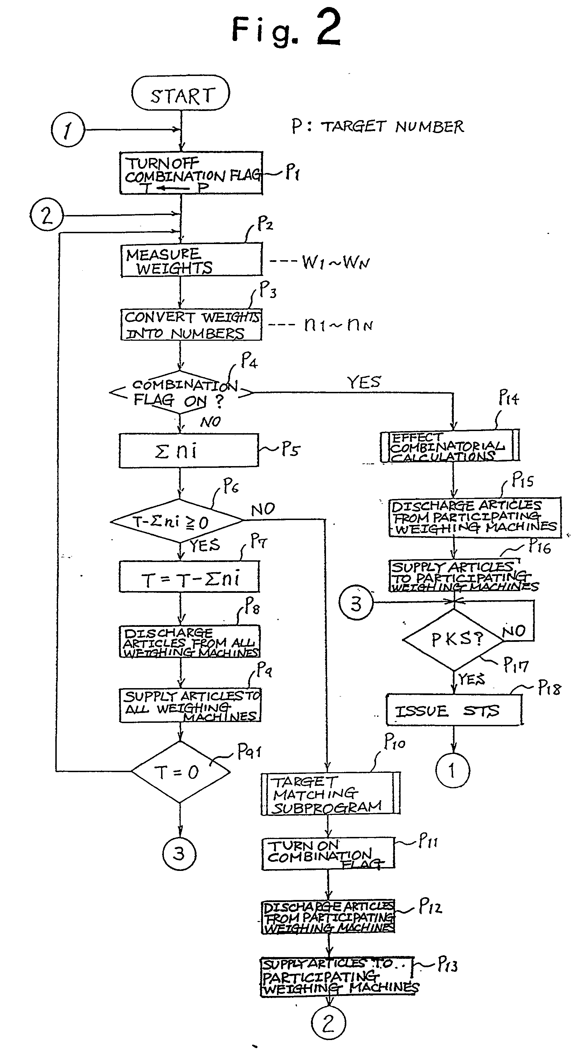

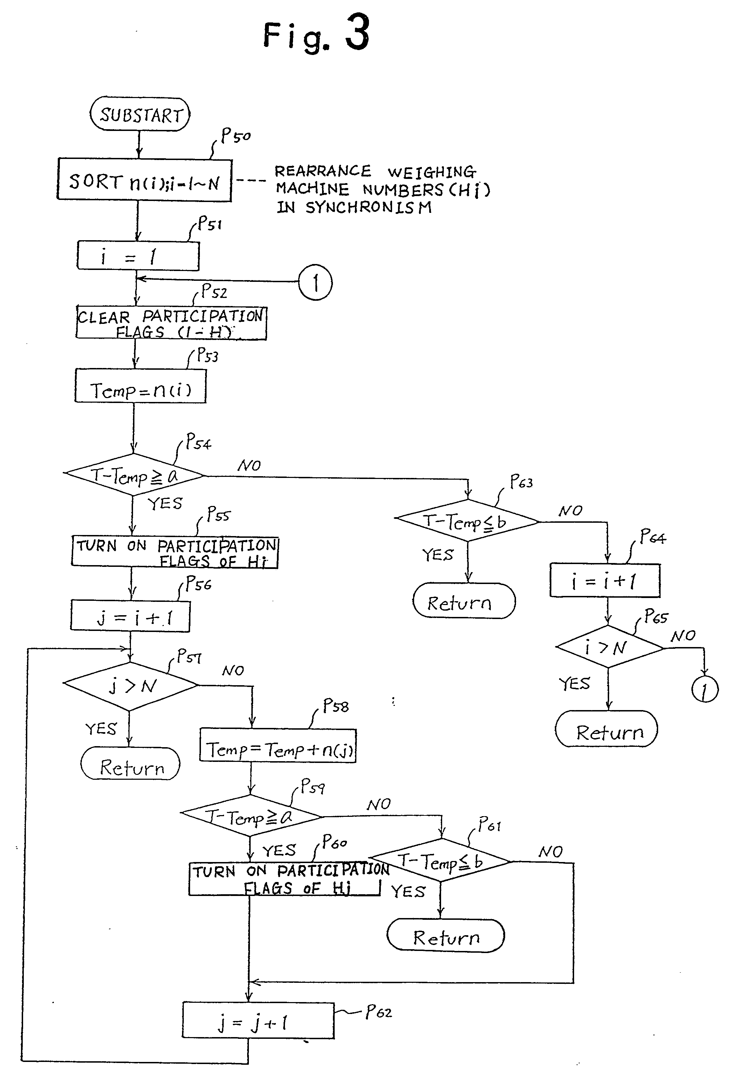

Operation of the combinatorial weighing apparatus will be described below with reference to the flowcharts of Figs. 2 and 3. The flowchart of Fig. 2 represents an overall operation sequence of the combinatorial weighing apparatus.

**(1) Conversion from weight to number:**

In a step P1, a combination flag is turned off, and a preset target number P is set in an index register which stores an intermediate target number T. In a step P2, the weighing machines 101-1, 101-2, ... 101-N measures the weights of batches of articles to produce weight signals WI ~ WN. In a step P3, the weight signals WI ~ WN are divided by the average unit weight of the articles which has been determined in advance to find numbers n1 ~ nN of the articles in the respective batches. A step P4 checks if the combination flag is on or not. If the combination flag is not on, then control proceeds to a step P5 in which the total number $\Sigma$ni of the articles supplied to all the weighing machines is determined.

**(2) Discharge of the articles from all the weighing machines:**

A step P6 determines whether a value obtained by subtracting the total number $\Sigma$ni from the target number T is greater or equal to a preset number a.

If the value obtained by subtracting the total number $\Sigma$ni from the target number T is greater or equal to a, then control goes to a step 7 in which the intermediate target number T is updated by being replaced with that value. In a step P8, the weighed articles are discharged from all the weighing machines, and articles to be weighed are supplied again to all the weighing machines in a step P9. Control then returns to the step P2 only if the updated intermediate target number T is not zero in a step P91.

**(3) Discharge of the articles from some of the weighing machines:**

If T - $\Sigma$ni <a in the step P6, discharging the articles from all the weighing machines is inhibited. The articles are discharged from some of the weighing machines in order to bring the intermediate target number T in a prescribed range of numbers (a ~ b) which will be optimum in a final combinatorial weighing operation.

More specifically, a target matching subprogram is executed in a step P10 which will be described later with reference to the flowchart of Fig. 3. In a next step P11, the combination flag which has been determined in the step P10 is turned on. In a step P12, the articles are discharged from those weighing machines which have been determined. The weighing machines from which the articles have been discharged are then supplied with new articles in a step P13, from which control returns to the step P2.

**(4) Discharge of the articles according to combinatorial processing:**

If the combination flag is on in the step P4, then combinatorial calculations are effected in a step P14. In a next step P15, the articles are discharged from those weighing machines which have participated in the combinatorial process that selects an optimum combination of weights. In a step P16, new articles are supplied to those weighing machines from which the articles have been discharged. Thereafter, a step P17 confirms whether there is a package enable signal PKS. If there is, then all the articles discharged into the collecting chute 3 are discharged by a package starting command signal STS issued in a step P18, from which control goes back to the step P1.

If a target number of articles are discharged in the above process of discharging the articles from all the weighing machines, then T = 0 in the step P91, and control goes from the step P91 to the step P17 and proceeds via the step P18 back to the step P1.

Fig. 3 shows the flowchart of the target matching subprogram indicated in the step P10 in Fig. 2.

The flowchart of Fig. 3 will be described below.

**(1) Selection of weighing machine i:**

In a step P50, the numbers of the articles, converted from the measured weights thereof, in the batches supplied to the weighing machines are rearranged in the order of magnitude, and weighing machine numbers Hi are also rearranged in synchronism with the rearrangement of the numbers of the articles. Then, an index i is set to 1 in a step P51, and combination participation flags are cleared in a step P52. Thereafter, in a step P53, a converted number value n(i) is set as a candidate weighing machine for discharging the articles. In this case, the number n(i) is set as a candidate weighing machine for discharging the articles, and the maximum converted number value is set to Temp.

A next step P54 checks if a value obtained by subtracting Temp from the intermediate target number T is greater than or equal to an upper limit target a of the prescribed number range required in the combinatorial weighing process (T - Temp ≤ a). If T - Temp ≤ a, then the participation flag of the weighing machine Hi with the maximum converted number value is turned on in a step P55, and an index j is set to i + 1, i.e., the second largest converted number value in a step P56. Then, a step P57 checks if j > N (N is the number of the weighing machines).

(2) Selection of weighing machine j:

When the intermediate target number T does not fall in the prescribed number range which is made optimum in the final combinatorial weighing operation even if the weighing machine i is selected, it is necessary to successively select lower-value weighing machines j until the condition j > N is reached. More specifically, if the answer to the decision block P57 is NO, then the index Temp is updated by adding the second largest converted number value in a step P58. A step P59 checks if a value obtained by subtracting the updated index Temp from the intermediate target number T has reached the upper limit target a. If the value has reached the upper limit target a, then the participation flag of the weighing machine j with the second largest converted number value is turned on in a step P60, and the index j is incremented by 1 in a step P62, from which control goes back to the step P57.

Therefore, the processing from the steps P58 to P62 is repeated in order to designate the weighing machines successively in the order of magnitude of converted number values and turn their participation flags on. When the intermediate target number T has reached the prescribed number range which is made optimum in the final combinatorial weighing operation, control returns from a step P61 to the step P11, thus leaving the subroutine shown in Fig. 3.

If the answer to the decision step P59 is NO, i.e., if the value obtained by subtracting the updated index Temp from the intermediate target number T has reached the upper limit target a, then the step P61 checks if that value is smaller than or equal to a lower limit target b (a > b) (T -Temp ≤ b). If the answer to the step P61 is YES, control goes to the step 11 in Fig. 1, and if the answer is NO, then control goes to the step P62 to increment the index j by 1.

(3) No weighing machines participated:

If the answer to the decision step P54 is NO, then control goes to a step P63 in which the value obtained by subtracting the index Temp from the intermediate target value T is compared with the lower limit target b, as With the step P61. If the answer to the step P63 is YES, then control returns to the step P11 shown in Fig. 2. Since there are no participation flags in this case, no partial discharging of articles is effected, and control goes to the steps for the combinatorial weighing process.

Where the weighing machine i with the maximum converted number value participate in partial discharging of articles, if the value obtained by the above subtraction is lower than the lower limit target b in the step P63, control goes to a step P64 in which selection of the weighing machine i is repeated. In a step P65, the index i is compared with the number N of the weighing machines. If the answer to the step P65 is YES, then no partial discharging is carried out, and control proceeds to the combinatorial weighing process. In such a case, the quantity of articles to be supplied to the pool hoppers 2b has to be regulated to make it possible to bring the target number in the prescribed number range (a - b) which is made optimum in the final combinatorial weighing operation.

In a method of counting articles, embodying the present invention, to obtain a target number of articles through a plurality of article weighing operations or cycles, only those numbers of articles which are discharged without combinatorial counting are added, discharging of articles from all the weighing machines is continued, and a target number required for effecting combinatorial counting in the final weighing operation through partial discharging is set to a prescribed range, e.g., from 30 to 10. In a counting process that precedes the final weighing operation, only the numbers of discharged articles are added and stored. Therefore, even if a multiplexed counting process is involved, the combinatorial counting process is effected only once in the final stage, so that the articles can be counted easily with an error of + 1 or so even if a target number is of a large value. Thus, the absolute error can be minimized, and quicker processing is made possible than would be if a combinatorial counting process were effected each time the weighing operation is carried out.

In the aforesaid description, it is assumed that the weighing machines have equal abilities to discharge articles. However, for processing a large quantity of articles at higher speed, the combinatorial weighing apparatus may have a large-capacity hopper capable of processing the articles parallel to the combinatorial weighing process, so that conversion of weights into numbers and discharging of articles may be effected by the large-capacity hopper.

Although a certain preferred embodiment has been shown and described, it should be understood that many changes and modifications may be made therein without departing from the scope of the appended claims.

## Claims

1. A combinatorial counting method in a weighing apparatus having a plurality of weighing machines and processing means for dividing the weights of batches of articles supplied to the respective weighing machines by the average unit weight of the articles to determine the numbers of the articles in the batches, said combinatorial counting method comprising the steps of:
converting the weights of the batches of the articles supplied to the respective weighing machines into numbers of the articles in the batches;
resetting an intermediate target number to a value obtained by subtracting the total value of the said numbers from the intermediate target number;
discharging the articles from selected ones of the weighing machines to bring the intermediate target number in a predetermined number range (a ~ b) which will be made optimum in a final combinatorial weighing operation; and
determining a final target number of articles to be discharged by a combinatorial counting process.

2. A combinatorial weighing apparatus for counting a target number of articles by converting the weights of batches of articles supplied to a plurality of weighing machines to numbers based on the average unit weight of the articles, said combinatorial weighing apparatus comprising:
discharging means for discharging the batches of articles, with the weights converted to the numbers, from the weighing machines in each counting process;
adding means for adding and storing the numbers of the discharged articles in the batches; and
combinatorial counting means for effecting a combinatorial counting process after a value obtained by subtracting the total of the numbers of the discharged articles is below a predetermined value.

HL36945

# Fig.1

## Fig.4

# Fig. 2

START

① → TURN OFF COMBINATION FLAG T ← P ~ $P_1$

P : TARGET NUMBER

② → 

MEASURE WEIGHTS ~ $P_2$ --- $W_1 \sim W_N$

CONVERT WEIGHTS INTO NUMBERS ~ $P_3$ --- $n_1 \sim n_N$

COMBINATION FLAG ON ? $P_4$ — YES →

NO

$\Sigma ni$ ~ $P_5$

$T - \Sigma ni \geqq 0$ $P_6$ — NO →

YES $P_7$

$T = T - \Sigma ni$

DISCHARGE ARTICLES FROM ALL WEIGHING MACHINES ~ $P_8$

SUPPLY ARTICLES TO ALL WEIGHING MACHINES ~ $P_9$

$T = 0$ ~ $P_{91}$

③

EFFECT COMBINATORIAL CALCULATIONS ~ $P_{14}$

DISCHARGE ARTICLES FROM PARTICIPATING WEIGHING MACHINES ~ $P_{15}$

SUPPLY ARTICLES TO PARTICIPATING WEIGHING MACHINES ~ $P_{16}$

③ → P K S ? — NO

YES $P_{17}$

ISSUE STS ~ $P_{18}$

①

TARGET MATCHING SUBPROGRAM ~ $P_{10}$

TURN ON COMBINATION FLAG ~ $P_{11}$

DISCHARGE ARTICLES FROM PARTICIPATING WEIGHING MACHINES ~ $P_{12}$

SUPPLY ARTICLES TO PARTICIPATING WEIGHING MACHINES ~ $P_{13}$

②

# Fig. 3

SUBSTART

$P_{50}$

SORT $n(i); i-1 \sim N$ - - - REARRANGE WEIGHING MACHINE NUMBERS (Hi) IN SYNCHRONISM

$P_{51}$

$i = 1$

①

$P_{52}$

CLEAR PARTICIPATION FLAGS (1~H)

$P_{53}$

$Temp = n(i)$

$P_{54}$

$T - Temp \geqq a$ — NO

YES

$P_{55}$

TURN ON PARTICIPATION FLAGS OF Hi

$P_{56}$

$j = i + 1$

$P_{57}$

$j > N$ — NO

YES

Return

$P_{58}$

$Temp = Temp + n(j)$

$P_{59}$

$T - Temp \geqq a$ — NO

YES $P_{60}$

TURN ON PARTICIPATION FLAGS OF Hj

$P_{61}$

$T - Temp \leqq b$ — NO

YES

Return

$P_{62}$

$j = j + 1$

$P_{63}$

$T - Temp \leqq b$ — NO

YES

Return

$P_{64}$

$i = i + 1$

$P_{65}$

$i > N$ — NO

YES ①

Return